# EUROPEAN PATENT APPLICATION

(11) **EP 3 076 597 A1**
(43) Date of publication of application: **05.10.2016**
(21) Application number: 16158918.9
(22) Date of filing: 07.03.2016
(51) Int. Cl.: H04L 12/24, H04W 24/00

(54) **DISPLAY METHOD AND INFORMATION PROCESSING DEVICE FOR DISPLAYING CONNECTION RELATIONSHIP BETWEEN DEVICES**

(30) Priority: 31.03.2015 JP 2015073198
(71) Applicant: FUJITSU LIMITED, Kawasaki-shi, Kanagawa 211-8588 (JP)
(72) Inventor: Tashiro, Masayuki, Kanagawa, 211-8588 (JP); Ishiwatari, Nobumitsu, Kanagawa, 211-8588 (JP); Matsuike, Mitsumasa, Tokyo, 163-1018 (JP); Nogami, Tatsuya, Fukuoka, 814-8588 (JP)
(74) Representative: Hoffmann Eitle

(57) **Abstract**

After a display displays a first symbol (1001) that represents a first device from among a plurality of devices in a communication network, a processor receives (901) an instruction to display a specific port group from among a plurality of port groups that the first device includes. Then, the display displays (811, 904) a second symbol (1002) that represents a first port which is included in the specific port group in a position adjacent to the first symbol, and displays (813, 904) a line segment that indicates a connection relationship between the first port and a second device.

## Description

### FIELD

The embodiments discussed herein are related to a display method and an information processing device.

### BACKGROUND

A network visualization device is known that provides a network visualization means which allows a network manager to visually grasp a network easily (for example, see Patent Document 1) . The network visualization device causes a display device to display information of flows that match conditions which are specified in a topology screen or an inter-node traffic screen. In addition, when a specified flow is selected after such information is displayed on the screen, the network visualization device highlights the selected flow on each screen.

A field radio monitoring and display device is known that displays an icon which represents each field apparatus that has a radio communication function and a line segment which represents a signal transmission route of each field apparatus in an installation location of the field apparatus in a plant area (for example, see Patent Document 2). The field radio monitoring and display device groups field apparatuses that are collectively arranged and displays them using specified icons. In addition, the field radio monitoring and display device displays the content of the group in a form of a list of field apparatuses, a wiring diagram of a plant, an arrangement image of the field apparatuses, or the icons of the field apparatuses.

A sound system setting device is known that displays an element object which represents a sound signal processing function that is a component of a sound system (for example, see Patent Document 3) . The sound system setting device displays a port object that represents an input and output terminal of a signal which is displayed on the element object in a color that is set for each type of the port in advance. In addition, the sound system setting device displays a connecting wire that interconnects port objects in the same hue as that of the color of the port object which is a connection target and in a saturation and/or brightness that are/is obtained by changing the saturation and/or brightness of the color of the port object which is the connection target by a specified change amount.
Patent Document 1: Japanese Laid-open Patent Publication No. 2012-60604
Patent Document 2: Japanese Laid-open Patent Publication No. 2013-114471
Patent Document 3: Japanese Laid-open Patent Publication No. 2007-195078

### SUMMARY

It is an object in one aspect of the invention to clearly display a connection relationship of a plurality of devices in a communication network.

According to an aspect of the embodiments, a display displays a first symbol that represents a first device from among a plurality of devices in a communication network, and a processor receives an instruction to display a specific port group from among a plurality of port groups that the first device includes. Then, the display displays a second symbol that represents a first port which is included in the specific port group in a position adjacent to the first symbol, and displays a line segment that represents a connection relationship between the first port and a second device from among the plurality of devices.

### BRIEF DESCRIPTION OF DRAWINGS

FIG. 1 is a diagram illustrating a port display of a switch.
FIG. 2 is a diagram illustrating a link display of the switch.
FIG. 3 is a functional configuration diagram of an information processing device.
FIG. 4 is a diagram illustrating a chassis-type extension device.
FIG. 5 is a diagram illustrating a card-type extension device.
FIG. 6 is a diagram illustrating a unit-type extension device.
FIG. 7A is a diagram (part 1) illustrating information stored in a storage unit.
FIG. 7B is a diagram (part 2) illustrating information stored in the storage unit.
FIG. 7C is a diagram (part 3) illustrating information stored in the storage unit.
FIG. 8A is a flowchart (part 1) illustrating a port expanded display in a first display process.
FIG. 8B is a flowchart (part 2) illustrating the port expanded display in the first display process.
FIG. 9 is a flowchart illustrating slot changeover in the first display process.
FIG. 10 is a diagram illustrating the port expanded display.
FIG. 11 is a diagram illustrating a link display in the port expanded display.
FIG. 12A is a flowchart (part 1) illustrating a unit expanded display in a second display process.
FIG. 12B is a flowchart (part 2) illustrating the unit expanded display in the second display process.
FIG. 13A is a flowchart (part 1) illustrating a unit converged display in the second display process.
FIG. 13B is a flowchart (part 2) illustrating the unit converged display in the second display process.
FIG. 14 is a diagram illustrating a unit expanded display.
FIG. 15 is a diagram illustrating the port expanded display in the unit expanded display.
FIG. 16 is a hardware configuration diagram of the information processing device.

### DESCRIPTION OF EMBODIMENTS

The embodiments will be described in detail below with reference to the drawings.

In a case in which a switch that includes an extension port is included in a topology display which displays connection relationships of a plurality of switches in a communication network, it may be difficult to display ports of the switch and links between ports on a screen.

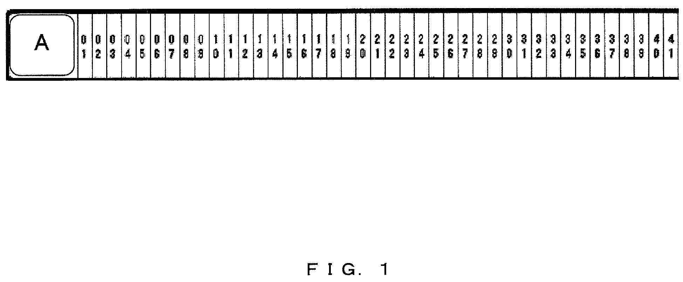

FIG. 1 illustrates an example of a port display of a switch that includes extension ports. A device A illustrated in FIG. 1 is, for example, an L3 switch and it is possible to extend the number of ports thereof up to 500 by adding extension ports. In the example illustrated in FIG. 1, 41 ports, port 01 to port 41, are displayed. Although it is possible to display 500 ports if the display is zoomed out, the display becomes hard to see.

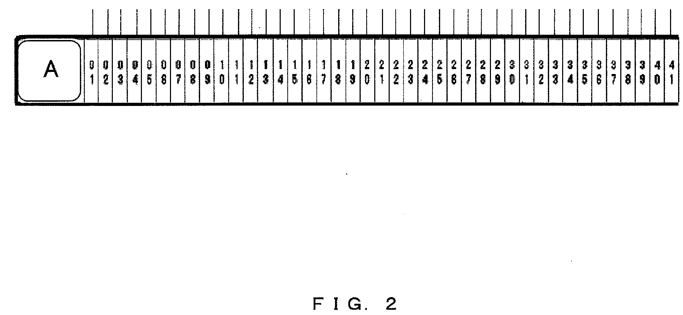

FIG. 2 illustrates an example of the link display of the device A in FIG. 1. In the example illustrated in FIG. 2, 41 line segments which represent connection relationships between the 41 ports and ports of another switch that is a connection destination are displayed. Although it is possible to display 500 line segments that correspond to the 500 ports if the display is zoomed out, the display becomes messy and hard to see.

Note that such a problem is not limited to a case of displaying connection relationships of a plurality of switches, and occurs in a case of displaying connection relationships of a plurality of other devices.

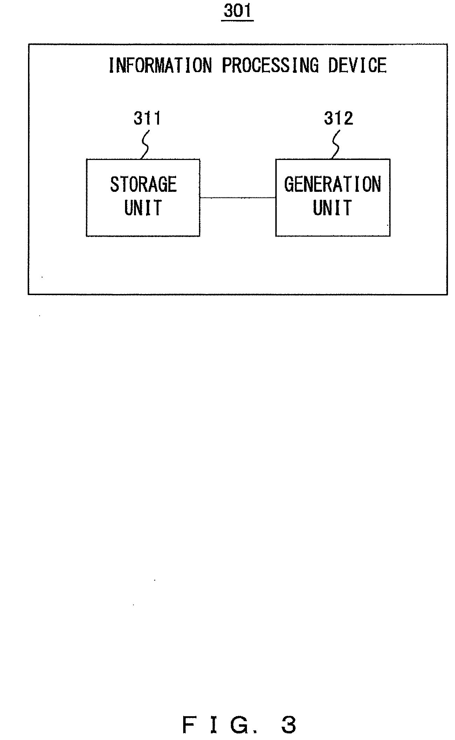

FIG. 3 illustrates a functional configuration example of the information processing device of an embodiment. An information processing device 301 in FIG. 3 includes a storage unit 311 and a generation unit 312, and performs a first display process or a second display process.

In a case of performing the first display process, the storage unit 311 stores information of a plurality of port groups that a first device from among a plurality of devices in a communication network includes. The generation unit 312 receives an instruction to display a specific port group from among the plurality of port groups.

Next, the generation unit 312 generates display data for displaying a second symbol that represents a first port which is included in the specific port group in a position adjacent to a first symbol that represents the first device, and for displaying a line segment that represents the connection relationship between the first port and a second device.

In a case of performing the second display process, the storage unit 311 stores information of the plurality of devices in the communication network. In a state in which a first symbol that represents a first device from among the plurality of devices and a second symbol which represents a second device from among the plurality of devices are displayed, the generation unit 312 receives an instruction to select the first symbol.

Next, when the storage unit 311 stores information which indicates that a third device which is one of the plurality of devices and which is connected to the first device is a device that extends the first device, the generation unit 312 receives an instruction to display the third device. Then, the generation unit 312 generates display data for displaying a third symbol taht represents the third device and that has a mark which the first symbol has.

In the first display process or the second display process, the generation unit 312 outputs the generated display data to a display device, and the display device displays on a display screen a symbol, a line segment, or the like that is indicated by the display data. The display device may be provided in the information processing device 301 or may be provided in a user terminal that is connected to the information processing device 301 via the communication network.

According to the first display process or the second display process, it is possible to clearly display a connection relationship of a plurality of devices in the communication network.

Each of the plurality of devices in the communication network corresponds to, for example, an L2 switch, an L3 switch, a router, a load balancer, a gateway, a bandwidth control device, etc. The first display process is suitable for extending the port group that a device includes by adding a chassis-type or card-type extension device. The second display process is suitable for extending the port group that a device includes by adding a unit-type extension device.

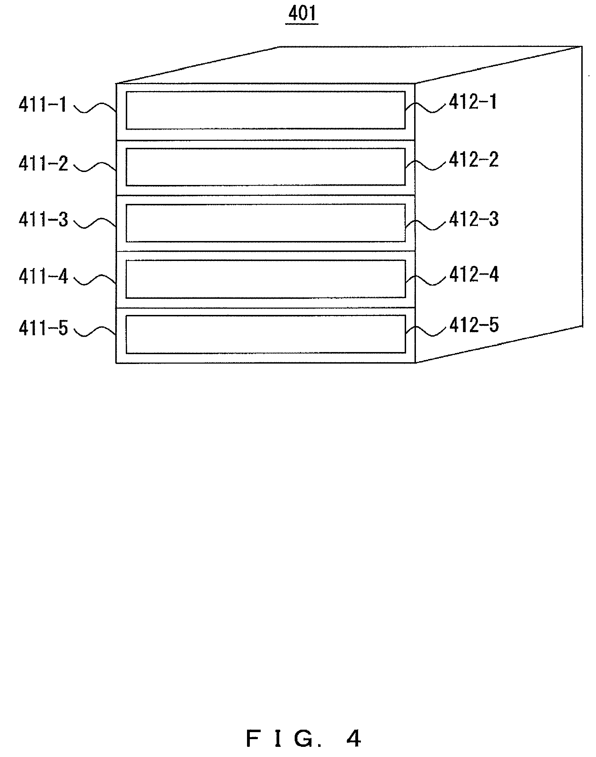

FIG. 4 illustrates an example of the chassis-type extension device. A device 401 includes a standard port group and slots 411-1 to 411-5. A chassis-type extension device 412-i (i=1 to 5) is attached to each slot 411-i. Each extension device 412-i includes a plurality of ports and corresponds to one port group. It is possible to extend the number of ports of the device 401 by attaching the extension device 412-i to an empty slot. The number of slots is not limited to 5.

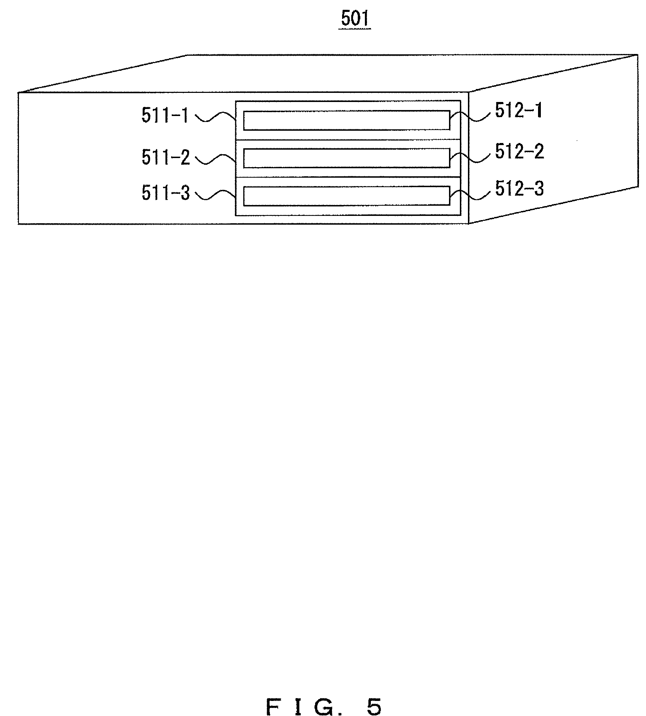

FIG. 5 illustrates an example of the card-type extension device. A device 501 includes a standard port group and slots 511-1 to 511-3. A card-type extension device 512-i (i=1 to 3) is attached to each slot 511-i. Each extension device 512-i includes a plurality of ports and corresponds to one port group. It is possible to extend the number of ports of the device 501 by attaching the extension device 512-i to an empty slot. The number of slots is not limited to 3.

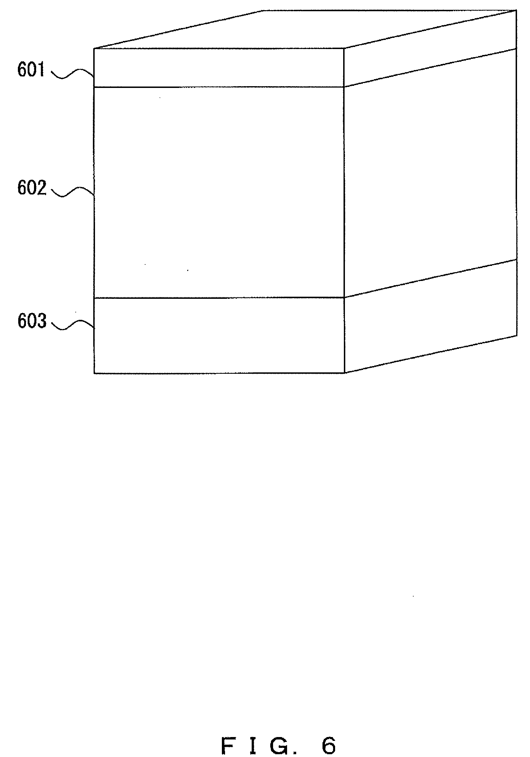

FIG. 6 illustrates an example of the unit-type extension device. A device 601 is a main device and devices 602 and 603 are unit-type extension devices (unit devices). Each of the devices 601 to 603 includes a plurality of ports and corresponds to one port group. Each device may have a configuration such as the configuration of the device 401 in FIG. 4 or the configuration of the device 501 in FIG. 5. It is possible to extend the number of ports of the device 601 by connecting the devices 602 and 603 to the device 601. The number of extension devices to be connected to the device 601 is not limited to 2.

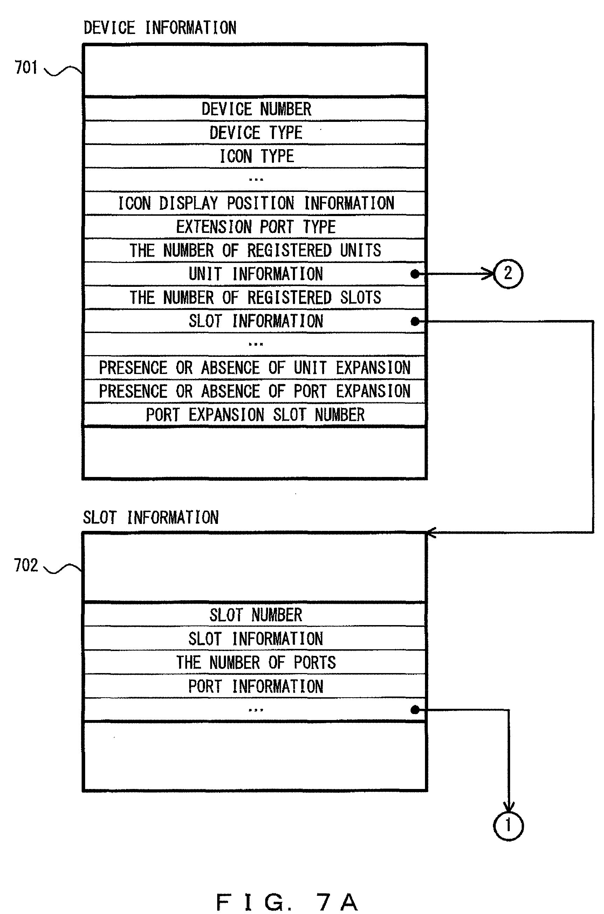

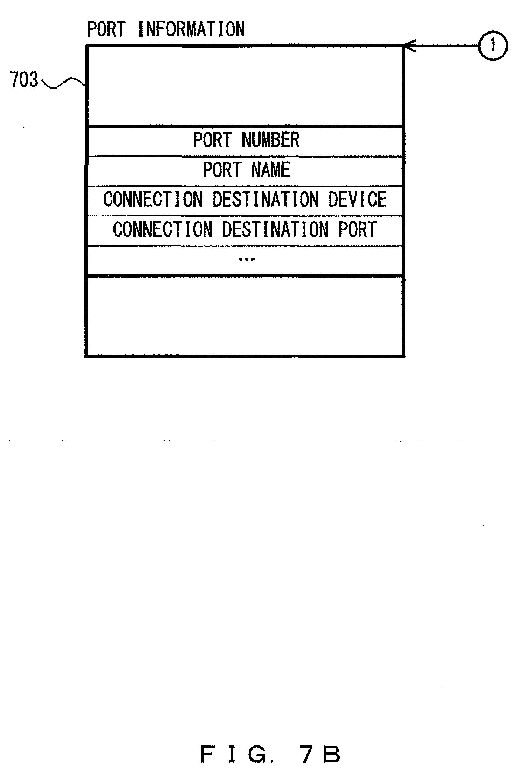

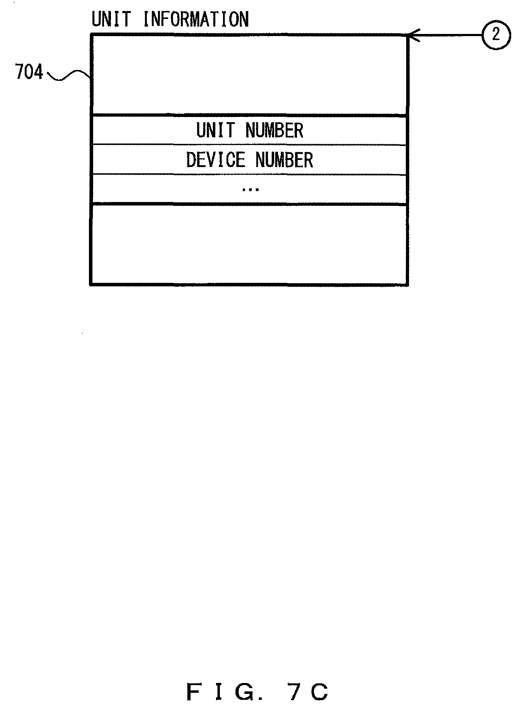

FIGS. 7A to 7C illustrate an example of information that the storage unit 311 stores in the first display process and the second display process. Device information 701 in FIG. 7A is information of each device in the communication network, and slot information 702 in FIG. 7A is information of a slot that each device includes. Port information 703 in FIG. 7B is information of a port that an extension device which is attached to each slot includes, and unit information 704 in FIG. 7C is information of a unit device that is connected to each device.

The device information 701 includes a device number, a device type, an icon type, icon display position information, an extension port type, the number of registered units, unit information, the number of registered slots, slot information, a presence or absence of unit expansion, a presence or absence of port expansion, and a port expansion slot number.

The device number is identification information of a device, the device type indicates whether the device is a unit device or not, the icon type indicates the type of the icon that corresponds to the symbol which represents the device, and the icon display position information indicates the display position of the icon on the display screen. It is possible to set the icon type of the main device to which the unit device is connected as the icon type of the unit device.

The extension port type indicates which of the chassis type, the card type, or the unit type the method for extending the number of ports of the device is, or indicates that the number of ports is not extended (without extension). The number of registered units indicates the number of unit devices that are connected to the device, and the unit information indicates a pointer that points to the unit information 704. The number of registered slots indicates the number of slots to which an extension device is attached, and the slot information indicates a pointer that points to the slot information 702.

The presence or absence of unit expansion indicates whether or not a unit device that is connected to the device is expanded and displayed. The presence or absence of port expansion indicates whether or not the port group that the extension device includes is expanded and displayed, and the port expansion slot number indicates the slot number of the slot to which the extension device that is expanded and displayed is attached.

The slot information 702 includes a slot number, slot information, the number of ports, and port information. The slot number is the identification information of a slot, and the slot information indicates the name, etc. of an extension device that is attached to the slot. The number of ports indicates the number of used ports from among the port group that the extension device which is attached to the slot includes, and the port information indicates a pointer that points to the port information 703. In a case in which the slot number is 0, the slot information 702 corresponds to the standard port group that the device includes.

The port information 703 includes a port number, a port name, a connection destination device, and a connection destination port. The port number is identification information of a port, and the port name indicates the name of the port. The connection destination device indicates the device number of the device that is the connection destination of the port, and the connection destination port indicates the port number of the connection destination port that the connection destination device includes.

The unit information 704 includes a unit number and a device number. The unit number is identification information of a unit device, and the device number indicates the device number that corresponds to the unit device. In a case in which the device that is indicated by the device information 701 is a unit device, 0 is set to the unit number of the unit information 704 that is pointed to by the device information 701, and the device number of the main device that is a connection destination is set to the device number of the unit information 704.

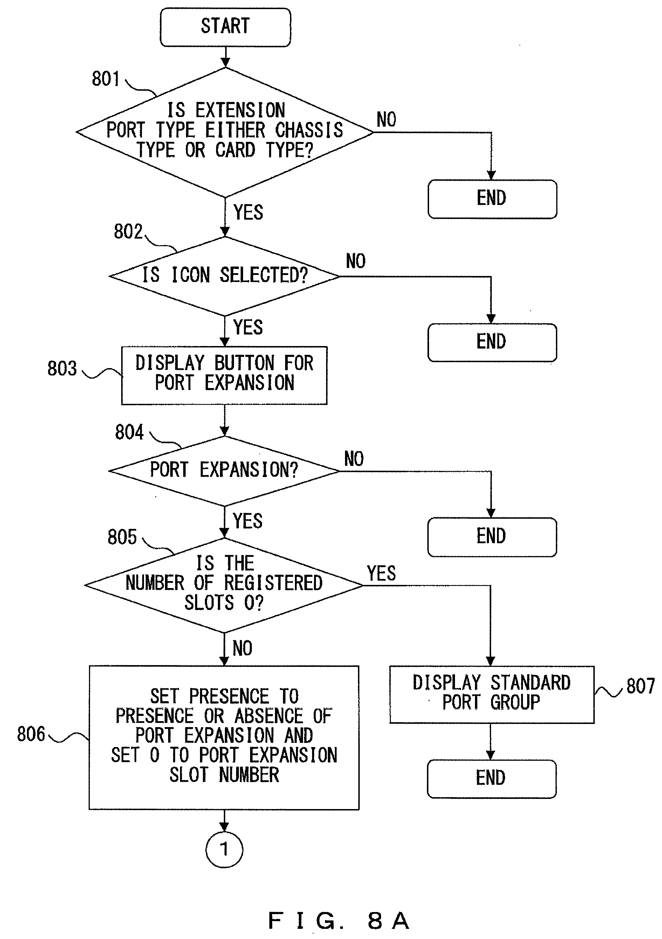

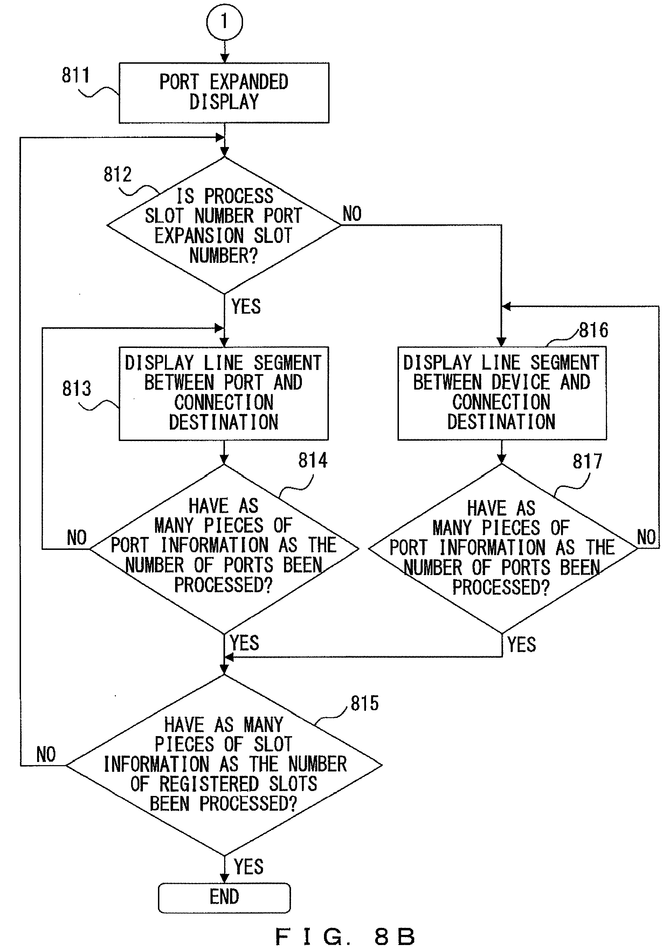

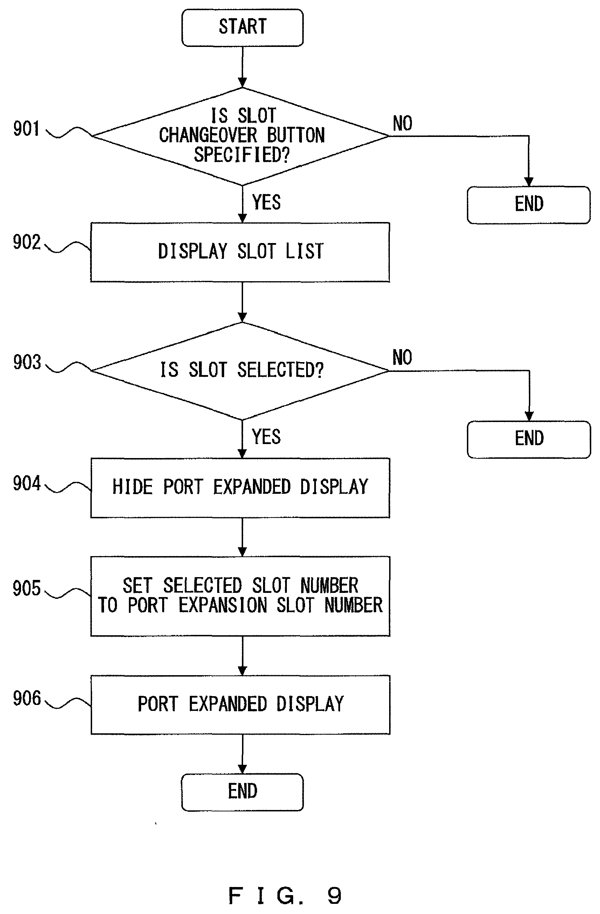

FIGS. 8A and 8B are a flowchart illustrating an example of the port expanded display in the first display process. FIG. 9 is a flowchart illustrating an example of the slot changeover in the first display process.

The port expanded display in FIGS. 8A and 8B is initiated in a state in which a plurality of icons that represent a plurality of devices in the communication network are displayed on the display screen. First, the generation unit 312 refers to the device information 701 of the plurality of displayed devices, and checks the extension port type of each device (step 801). In a case in which the extension port types of all the devices are either the unit type or without extension (No in step 801), the generation unit 312 terminates the process.

In a case in which the extension port type of one of the devices is either the chassis type or the card type (Yes in step 801), the generation unit 312 checks whether or not it has received an instruction to select the icon that represents the device (step 802) . For example, in a case in which an operation such as mouseover for moving a cursor to the position of the icon is performed, the generation unit 312 can receive the operation as the instruction to select the icon. In a case in which the generation unit 312 does not receive the instruction to select the icon (No in step 802), the generation unit 312 terminates the process.

In a case in which the generation unit 312 has received the instruction to select the icon (Yes in step 802), the generation unit 312 displays on the selected icon a button for port expansion for expanding and displaying the port that the device which the icon represents includes (step 803).

Next, the generation unit 312 checks whether or not it has received an instruction to specify the button for port expansion (step 804). For example, in a case in which an operation such as a clicking on the button for port expansion is performed, the generation unit 312 can receive the operation as the instruction to specify the button for port expansion. In a case in which the generation unit 312 does not receive the instruction to specify the button for port expansion (No in step 804), the generation unit 312 terminates the process.

In a case in which the generation unit 312 has received the instruction to specify the button for port expansion (Yes in step 804), the generation unit 312 refers to the device information 701 of the device that the selected icon represents, and checks whether or not the number of registered slots is 0 (step 805). In a case in which the number of registered slots is 0 (Yes in step 805), the generation unit 312 displays the standard port group that the device includes (step 807) and terminates the process.

In a case in which the number of registered slots is not 0 (No in step 805), the generation unit 312 sets a presence of expanded display to the presence or absence of port expansion of the device information 701, and sets 0 to the port expansion slot number (step 806).

Next, the generation unit 312 refers to the port information that is pointed to by the slot information 702 which corresponds to the port expansion slot number, and expands and displays the symbol that represents each port which is included in the standard port group in a position adjacent to the selected icon (step 811) . In addition, the generation unit 312 displays a slot changeover button. For example, the port expansion slot number is displayed on the slot changeover button.

Next, the generation unit 132 sets the slot number of the slot information 702 that is pointed to by the device information 701 of the device which the selected icon represents to a process slot number, and compares the process slot number with the port expansion slot number (step 812).

In a case in which the process slot number matches the port expansion slot number (Yes in step 812), the generation unit 312 refers to the port information 703 of an expanded and displayed port, and this information is pointed to by the slot information 702 that corresponds to the process slot number (step 813). Then, the generation unit 312 displays the line segment that interconnects the symbol which represents the port and the symbol which represents the connection destination device or the connection destination port.

Next, the generation unit 312 checks whether or not it has processed as many pieces of the port information 703 as the number of ports of the slot information 702 that corresponds to the process slot number (step 814) . In a case in which there remains unprocessed port information 703 (No in step 814), the generation unit 312 repeats the processes in step 813 and subsequent steps with respect to the next port information 703.

In contrast, in a case in which the process slot number does not match the port expansion slot number (No in step 812), the generation unit 312 refers to the port information 703 of a port that is not expanded and displayed, and this information is pointed to by the slot information 702 that corresponds to the process slot number (step 816). Then, the generation unit 312 displays the line segment that interconnects the selected icon and the symbol that represents the connection destination device or the connection destination port.

At that time, the generation unit 312 may display the line segment that interconnects the selected icon and the symbol which represents the connection destination by making the attribute thereof differ from the attribute of the line segment which interconnects the symbol that represents each port and the symbol that represents the connection destination. The color, thickness, etc. of a line segment may be used as the attribute of the line segment.

Next, the generation unit 312 checks whether or not it has processed as many pieces of the port information 703 as the number of ports of the slot information 702 that corresponds to the process slot number (step 817) . In a case in which there remains unprocessed port information 703 (No in step 817), the generation unit 312 repeats the processes in step 816 and subsequent steps with respect to the next port information 703.

In a case in which the generation unit 312 has processed as many pieces of the port information 703 as the number of ports of the slot information 702 (Yes in step 814 or step 817), the generation unit 312 checks whether or not it has processed as many pieces of the slot information 702 as the number of registered slots of the device information 701 (step 815). In a case in which there remains unprocessed slot information 702 (No in step 815), the generation unit 312 repeats the processes in step 812 and subsequent steps with respect to the next slot information 702.

Then, in a case in which the generation unit 312 has processed as many pieces of the slot information 702 as the number of registered slots (Yes in step 815), the generation unit 312 terminates the process.

Slot changeover in FIG. 9 is initiated in a state in which the port expanded display of the standard port group or the port group that the extension device includes is performed and the slot changeover button is displayed. First, the generation unit 312 checks whether or not it has received an instruction to specify the slot changeover button (step 901).

In a case in which operation such as a clicking on the slot changeover button is performed, the generation unit 312 can receive the operation as an instruction to specify the slot changeover button. The instruction to specify the slot changeover button indicates an instruction to display a slot list for changing over the slot. In a case in which the generation unit 312 does not receive the instruction to specify the slot changeover switch (No in step 901), the generation unit 312 terminates the process.

In a case in which the generation unit 312 has received the instruction to specify the slot changeover button (Yes in step 901), the generation unit 312 displays the list of selectable slots in the vicinity of the slot changeover button on the basis of the slot numbers and slot information of the slot information 702 that is pointed to by the device information 701 of the device represented by the icon that is displayed together with the slot changeover button (step 902) . For example, the slot numbers and slot information of the selectable slots are displayed in the slot list.

Next, the generation unit 312 checks whether or not it has received an instruction to select a changeover destination slot from the slot list (step 903) . In a case in which operation such as a clicking on a slot number on the displayed slot list is performed, the generation unit 312 can receive the operation as an instruction to select the changeover destination slot. The instruction to select the changeover destination slot indicates an instruction to change the slot that is a target for the port expanded display. In a case in which the generation unit 312 does not receive the instruction to select the changeover destination slot (No in step 903), the generation unit 312 terminates the process.

In a case in which the generation unit 312 has received the instruction to select the changeover destination slot (Yes in step 903), the generation unit 312 hides the port expanded display of the slot that corresponds to the port expansion slot number of the device information 701 (step 904). Thus, the symbol and the line segment of each port of the slot are hidden.

Next, the generation unit 312 sets the slot number of the changeover destination slot to the port expansion slot number (step 905), and performs the port expanded display of the corresponding port group (step 906) . In step 906, the processes that are the same as the processes in steps 811 to 817 in FIG. 8B are performed.

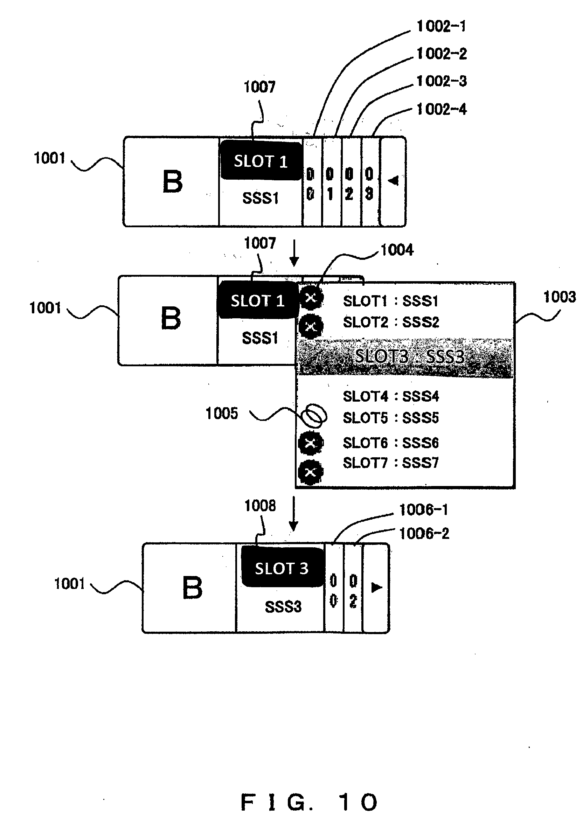

FIG. 10 illustrates an example of the port expanded display according to the first display process. An icon 1001 in FIG. 10 corresponds to a symbol that represents a device B, and a slot changeover button 1007 and symbols 1002-1 to 1002-4 are displayed in a position adjacent to the icon 1001. SLOT1 on the slot changeover button 1007 corresponds to the port expansion slot number and SSS1 corresponds to the name of the extension device that is attached to the slot of SLOT1. The symbols 1002-1 to 1002-4 are symbols that represent the ports of the slot of SLOT1 that is expanded and displayed, and 00 to 03 correspond to port numbers.

When the slot changeover button 1007 is specified in a state in which the port expanded display of SLOT1 is performed, a slot list 1003 is displayed. The slot numbers of seven slots, SLOT1 to SLOT7, and the names of the extension devices of the slots are displayed on the slot list 1003. SSS1 to SSS7 correspond to the names of the extension devices that are attached to the slots, SLOT1 to SLOT7, respectively.

A mark 1004 indicates a state in which failure has occurred in the extension device of the corresponding slot. A mark 1005 indicates a state in which, although failure has occurred in the extension device of the corresponding slot, settings for preventing failure display are configured.

When SLOT3 on the slot list 1003 is selected as a changeover destination slot, a port expanded display of SLOT 1 is changed to a port expanded display of SLOT 3. In the port expanded display of SLOT3, the slot number of SLOT3 and the name of the extension device of SLOT3 are displayed, and a slot changeover button 1008 and symbols 1006-1 and 1006-2 are displayed in a position adjacent to the icon 1001. The symbols 1006-1 and 1006-2 are symbols that represent the ports of the slot of SLOT3 that is expanded and displayed.

As described, by expanding and displaying only the port group that corresponds to the selected slot, the port display is easier to see than the port display in FIG. 1.

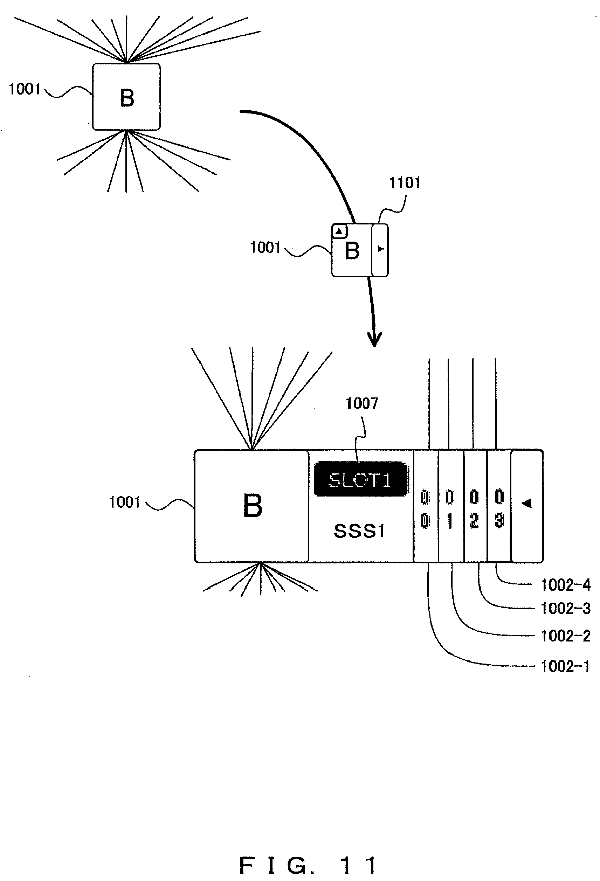

FIG. 11 illustrates an example of the link display in the port expanded display. In a state before the port expanded display of the device B is performed, a line segment that represents the connection relationship between each port that the device B includes and the connection destination of each port is displayed between the icon 1001 and each connection destination. In this case, the icon 1001 is displayed as a common symbol that is common to the port groups of the plurality of slots that the device B includes.

When the icon 1001 is selected in this state, a button for port expansion 1101 is displayed on the icon 1001. When the button for port expansion 1101 is specified, the port expanded display of the device B is initiated. When SLOT1 is selected as the changeover destination slot in the port expanded display, the port expanded display of SLOT1 is performed, and the slot changeover button 1007 and the symbols 1002-1 to 1002-4 are displayed in a position adjacent to the icon 1001.

Next, line segments that interconnect the symbols 1002-1 to 1002-4 and the symbols which represent the connection destination devices or connection destination ports of the respective ports are displayed. In addition, with respect to the port group of a slot other than SLOT1, a line segment that interconnects the icon 1001 and the symbol that represents the connection destination device or the connection destination port of each port are displayed. As the line segment that interconnects the icon 1001 and the symbol that represents the connection destination, a line segment whose color or thickness differs from the color or thickness of the line segments that interconnect the symbols 1002-1 to 1002-4 and the connection destinations may be used.

As described, by expanding and displaying only the port group that corresponds to the selected slot and the connection relationships of the port group, the link display is easier to see in comparison with the link display in FIG. 2. Therefore, a topology display of a plurality of devices becomes easy to see and settings and network monitoring in which ports are taken into consideration are facilitated.

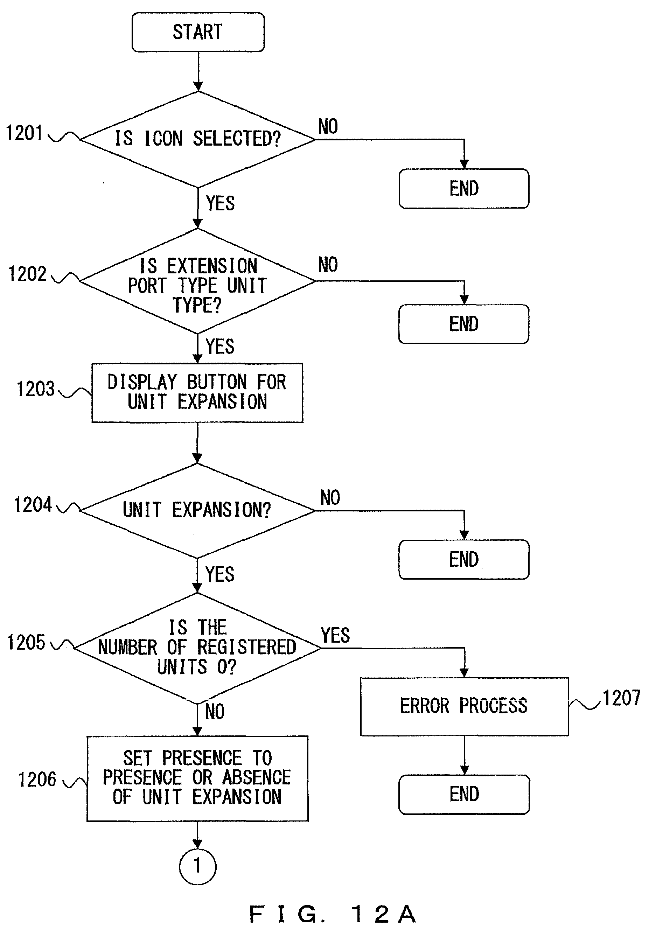

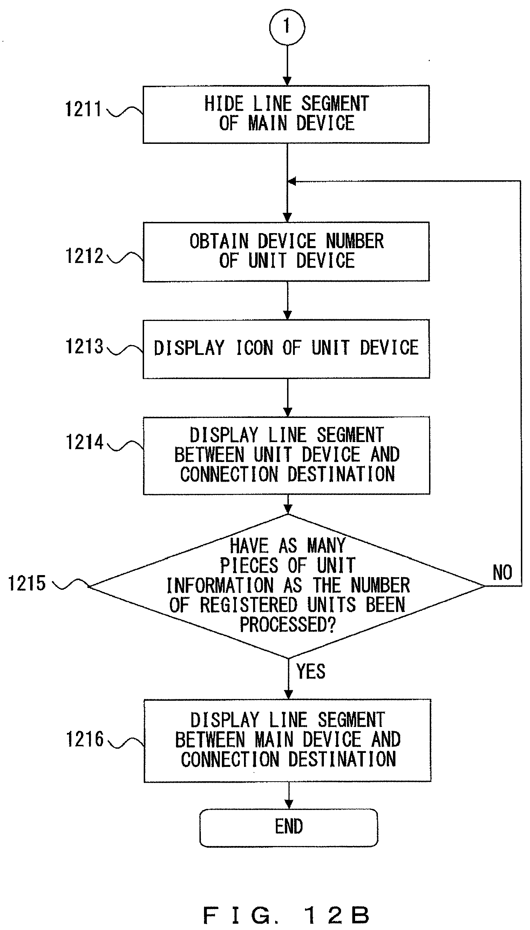

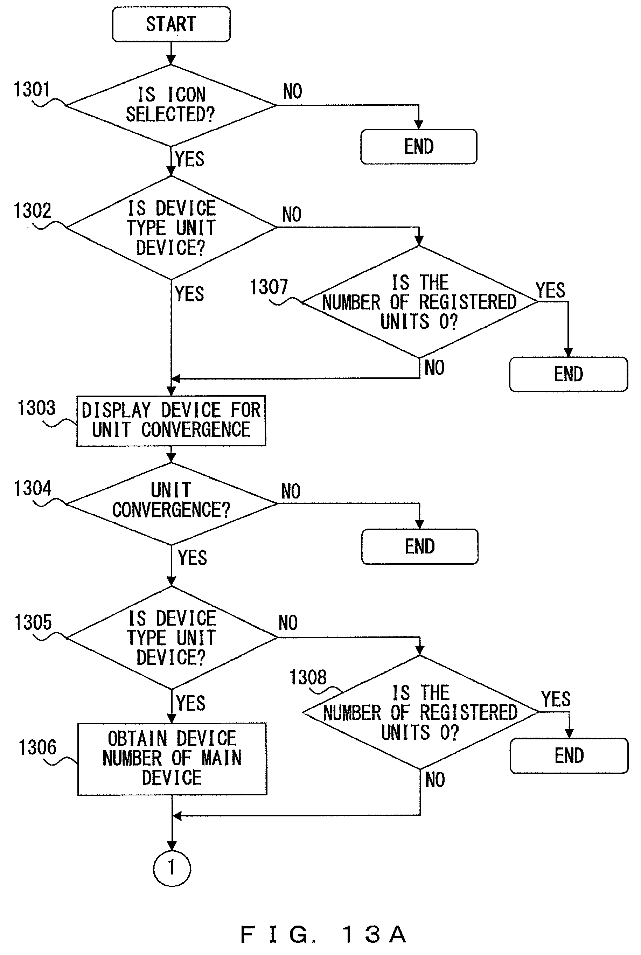

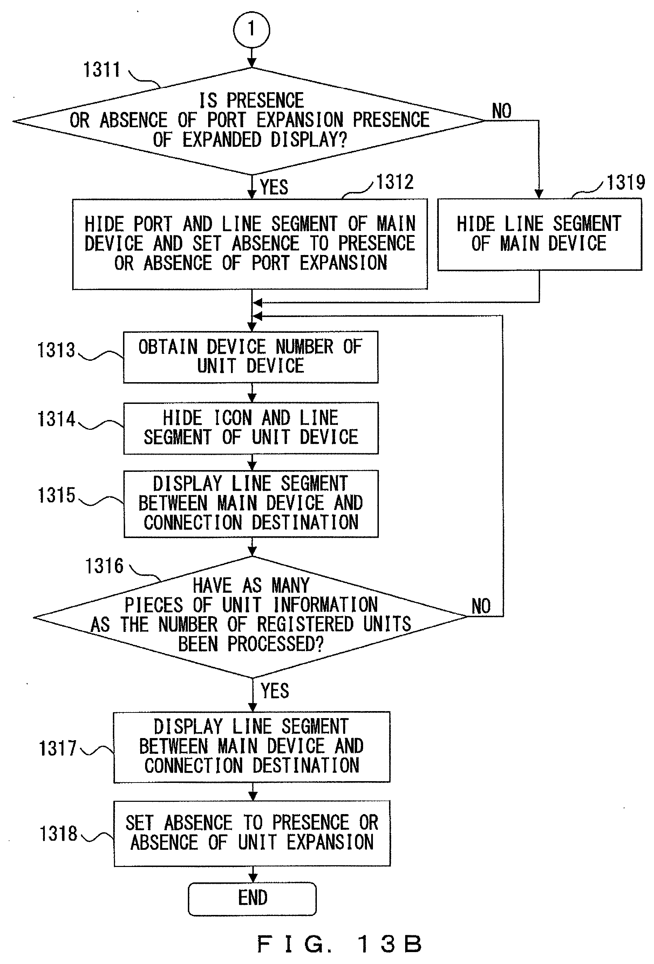

FIGS. 12A and 12B are a flowchart illustrating an example of the unit expanded display in the second display process. FIGS. 13A and 13B are a flowchart illustrating an example of the unit converged display in the second display process.

The unit expanded display in FIGS. 12A and 12B is initiated in a state in which a plurality of icons that represent a plurality of devices in the communication network are displayed on the display screen. First, the generation unit 312 checks whether or not it has received an instruction to select an icon that represents a displayed device (step 1201). In a case in which the generation unit 312 does not receive the instruction to select an icon (No in step 1201), the generation unit 312 terminates the process.

In a case in which the generation unit 312 has received the instruction to select an icon (Yes in step 1201), the generation unit 312 refers to the device information 701 of the device and checks the extension port type (Step 1202) . In a case in which the extension port type is the chassis type, the card type, or without extension (No in step 1202), the generation unit 312 terminates the process.

In a case in which the extension port type is the unit type (Yes in step 1202), the generation unit 312 displays on the selected icon a button for unit expansion for expanding and displaying the unit device that is connected to the main device which the selected icon represents (step 1203).

Next, the generation unit 312 checks whether or not it has received an instruction to specify the button for unit expansion (step 1204). In a case in which the generation unit 312 does not receive the instruction to specify the button for unit expansion (No in step 1204), the generation unit 312 terminates the process.

In a case in which the generation unit 312 has received the instruction to specify the button for unit expansion (Yes in step 1204), the generation unit 312 refers to the device information 701 of the main device that the selected icon represents, and checks whether or not the number of registered units is 0 (step 1205). In a case in which the number of registered units is 0 (Yes in step 1205), the generation unit 312 performs an error process (step 1207).

In a case in which the number of registered units is not 0 (No in step 1205), the generation unit 312 sets the presence of expanded display to the presence or absence of unit expansion of the device information 701 (step 1206), and hides the line segment between the selected icon and the icon that represents the connection destination device (step 1211).

Next, the generation unit 312 obtains the device number of unit information 704 that is pointed to by the device information 701 of the main device (step 1212). Then, the generation unit 132 refers to the device information 701 of the unit device that corresponds to the obtained device number, and displays the icon of the unit device that corresponds to the icon type in a display position which is indicated by the icon display position information (step 1213).

Next, the generation unit 312 refers to the slot information 702 of each slot that is pointed to by the device information 701 of the unit device and refers to the port information 703 of each port that is pointed to by the slot information 702 (step 1214). Then, the generation unit 312 displays a line segment that interconnects the icon of the unit device and the symbol which represents the connection destination device or the connection destination port of each port.

Next, the generation unit 312 checks whether or not it has processed as many pieces of the unit information 704 as the number of registered units that are described in the device information 701 of the main device (step 1215). In a case in which there remains unprocessed unit information 704 (No in step 1215), the generation unit 312 repeats the processes in step 1212 and subsequent steps with respect to the next unit information 704.

In a case in which the generation unit 312 has processed as many pieces of the unit information 704 as the number of registered units (Yes in step 1215), the generation unit 312 refers to the slot information 702 of each slot that is pointed to by the device information 701 of the main device, and refers to the port information 703 of each port that is pointed to by the slot information 702 (step 1216) . Then, the generation unit 312 displays a line segment that interconnects the icon of the main device and the symbol that represents the connection destination device or the connection destination port of each port.

The unit converged display in FIGS. 13A and 13B is initiated in a state in which the unit expanded display of a device is performed. First, the generation unit 312 checks whether or not it has received an instruction to select the icon that represents the displayed device (step 1301) . In a case in which the generation unit 312 does not receive the instruction to select the icon (No in step 1301), the generation unit 312 terminates the process.

In a case in which the generation unit 312 has received the instruction to select the icon (Yes in step 1301), the generation unit 312 refers to the device information 701 of the device and checks the device type (Step 1302).

In a case in which the device type is the unit device (Yes in step 1302), the generation unit 312 displays on the selected icon a button for unit convergence for converging the unit expanded display of the unit device that the selected icon represents (step 1303).

In a case in which the device type is not the unit device (No in step 1302), the generation unit 312 refers to the device information 701 of the device, and checks whether or not the number of registered units is 0 (step 1307) . In a case in which the number of registered units is 0 (Yes in step 1307), the generation unit 312 terminates the process.

In a case in which the number of registered units is not 0 (No in step 1307), the generation unit 312 displays on the selected icon the button for unit convergence for converging the unit expanded display of the main device that the selected icon represents (step 1303).

Next, the generation unit 312 checks whether or not it has received an instruction to specify the button for unit convergence (step 1304) . In a case in which the generation unit 312 does not receive the instruction to specify the button for unit convergence (No in step 1304), the generation unit 312 terminates the process.

In a case in which the generation unit 312 has received the instruction to specify the button for unit convergence (Yes in step 1304), the generation unit 312 refers to the device information 701 of the device that the selected icon represents, and checks the device type (step 1305).

In a case in which the device type is the unit device (Yes in step 1305), the generation unit 312 obtains the device number of the unit information 704 that is pointed to by the device information 701 of the unit device (step 1306). In this case, the obtained device number is the device number of the main device to which the unit device is connected.

In a case in which the device type is not the unit device (No in step 1305), the generation unit 312 refers to the device information 701 of the device and checks whether or not the registered unit number is 0 (step 1308) . In a case in which the number of registered units is 0 (Yes in step 1308), the generation unit 312 terminates the process. In a case in which the number of registered units is not 0 (No in step 1308), the generation unit 312 performs the processes in step 1311 and subsequent steps.

Next, the generation unit 312 refers to the device information 701 of the main device that the selected icon represents or the device information 701 of the main device that corresponds to the device number which has been obtained in step 1306, and checks the presence or absence of port expansion (step 1311).

In a case in which the presence of expanded display is set to the presence or absence of port expansion (Yes in step 1311), the generation unit 312 hides the port expanded display of the main device (step 1312). Therefore, the symbol of each port that is expanded and displayed and the line segment between the port and the connection destination device or the connection destination port of the port are hidden. In addition, the generation unit 312 sets an absence of expanded display to the presence or absence of port expansion.

In a case in which the absence of expanded display is set to the presence or absence of port expansion (No in step 1311), the generation unit 312 hides the line segment between the icon of the main device and the connection destination device or the connection destination port (step 1319).

Next, the generation unit 312 obtains the device number of the unit information 704 that is pointed to by the device information 701 of the main device (step 1313). Then, the generation unit 312 refers to the device information 701 of the unit device that corresponds to the obtained device number, and hides the icon of the unit device in a display position that is indicated by the icon display position information (step 1314). In addition, the generation unit 312 hides the line segment between the icon of the unit device and the connection destination device or the connection destination port.

Next, the generation unit 312 refers to the slot information 702 of each slot that is pointed to by the device information 701 of the unit device and refers to the port information 703 of each port that is pointed to by the slot information 702 (step 1315). Then, the generation unit 312 displays a line segment that interconnects the icon of the main device and the symbol which represents the connection destination device or the connection destination port of each port. Note that in a case in which the connection destination device is the main device itself, the generation unit 312 does not display the line segment.

Next, the generation unit 312 checks whether or not it has processed as many pieces of the unit information 704 as the number of registered units that are described in the device information 701 of the main device (step 1316). In a case in which there remains unprocessed unit information 704 (No in step 1316), the generation unit 312 repeats the processes in step 1313 and subsequent steps with respect to the next unit information 704.

In a case in which the generation unit 312 has processed as many pieces of the unit information 704 as the number of registered units (Yes in step 1316), the generation unit 312 refers to the slot information 702 of each slot that is pointed to by the device information 701 of the main device, and refers to the port information 703 of each port that is pointed to by the slot information 702 (step 1317) . Then, the generation unit 312 displays a line segment that interconnects the icon of the main device and the symbol that represents the connection destination device or the connection destination port of each port. Note that in a case in which the connection destination device is a unit device that is connected to the main device itself, the generation unit 312 does not display the line segment.

Next, the generation unit 312 sets the absence of expanded display to the presence or absence of unit expansion of the device information 701 of the main device (step 1318).

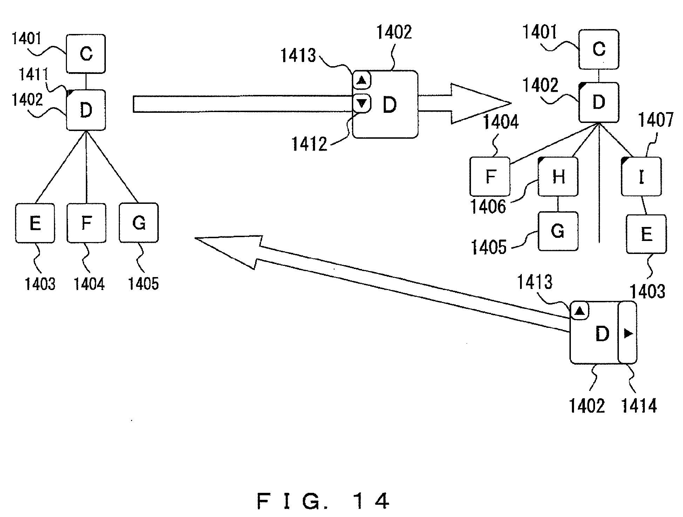

FIG. 14 illustrates an example of the unit expanded display according to the second display process. Icons 1401 to 1405 in FIG. 14 correspond to the symbols that represent devices C to G, respectively. A triangle mark 1411 at the upper-left corner of the icon 1402, which represents the device D, indicates that a unit device is connected to the device D.

When the icon 1402 is selected, a button for unit expansion 1412 and a button for unit convergence 1413 are displayed on the icon 1402. When the button for unit expansion 1412 is specified, a unit expanded display of the device D is performed, and an icon 1406 that represents a unit device H which is connected to the device D and an icon 1407 that represents a unit device H which is connected to the device D are displayed. At the upper-left corners of the icon 1406 and the icon 1407, marks that are the same as the mark 1411 of the icon 1402 are displayed. The mark 1411 is displayed according to the icon type of the device information 701.

At that time, the line segment that interconnects the icon 1406 and the icon 1402, the line segment that interconnects the icon 1406 and the icon 1405, the line segment that interconnects the icon 1407 and the icon 1402, and the line segment that interconnects the icon 1407 and the icon 1403 are displayed. The icon 1404 remains to be connected to the icon 1402; however, the connection destinations of the icon 1403 and the icon 1405 are changed to the icon 1407 and the icon 1406, respectively.

When the icon 1402 is selected again in this state, the button for unit convergence 1413 and the button for port expansion 1414 are displayed on the icon 1402. When the button for unit convergence 1413 is specified, the unit expanded display of the device D is cancelled, and the display is returned to a state before the unit expanded display is performed.

As described, by expanding and displaying only the unit devices that are connected to the selected main device, it is possible to clearly display the connection relationship between the main device and the unit device.

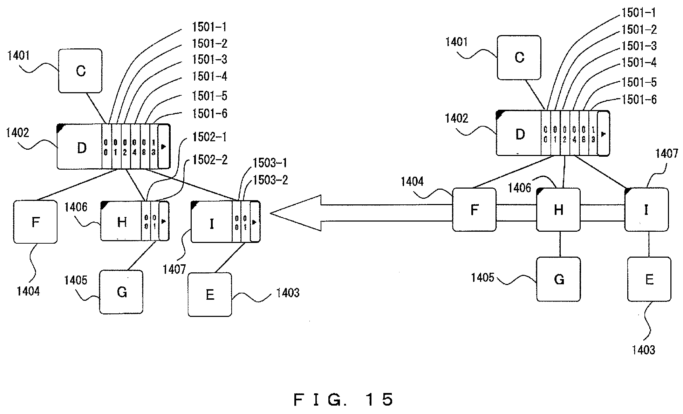

FIG. 15 illustrates an example of the port expanded display in the unit expanded display. The port expanded display in the unit expanded display is performed in the same manner as in the first display process.

When the button for port expansion 1414 in FIG. 14 is specified, the port expanded display of the main device D is performed, and symbols 1501-1 to 1501-6, which each represent a port, are displayed in a position adjacent to the icon 1402. Then, the line segment that interconnects the symbol 1501-1 and the icon 1401, the line segment that interconnects the symbol 1501-2 and the icon 1404, the line segment that interconnects the symbol 1501-3 and the icon 1406, and the line segment that interconnects the symbol 1501-4 and the icon 1407, are displayed.

Furthermore, in a case in which the port expanded display of the unit device H is performed, symbols 1502-1 and 1501-2, which each represent a port, are displayed in a position adjacent to the icon 1406. Then, the line segment that interconnects the symbol 1502-1 and the symbol 1501-3, and the line segment that interconnects the symbol 1502-2 and the icon 1405, are displayed.

Furthermore, in a case in which the port expanded display of the unit device I is performed, symbols 1503-1 and 1503-2, which each represent a port, are displayed in a position adjacent to the icon 1407. Then, the line segment that interconnects the symbol 1503-1 and the symbol 1501-4, and the line segment that interconnects the symbol 1503-2 and the icon 1403, are displayed.

As described, by expanding and displaying only the port group that the selected main device or unit device includes and the connection relationships of the port group, the topology display of a plurality of devices becomes easy to see and settings and network monitoring in which ports are taken into consideration are facilitated.

The states of respective devices may be distinguishably displayed by changing colors of the icons 1401 to 1407 in FIGS. 14 and 15. As the states of devices, normal, failure occurrence (absence of response), failure occurrence (presence of response), etc. are possible.

The device information 701, the slot information 702, the port information 703, and the unit information 704 in FIGS. 7A to 7C are examples only, and some of the information may be omitted or changed according to the configuration or conditions of the information processing device 301. For example, in a case in which all the extension port types of the devices in the communication network are either the chassis type or the card type, it is possible to omit the extension port type, the device type, the number of registered units, the unit information, and the presence or absence of unit expansion. In this case, it is also possible to omit the unit information 704.

In a case in which all the extension port types of the devices in the communication network are the unit type, it is possible to omit the extension port type of the device information 701. Furthermore, in a case in which each device includes only the standard port group, it is also possible to omit the number of registered slots and the port expansion slot number.

The flowcharts in FIGS. 8A, 8B, 9, 12A, 12B, 13A, and 13B are examples only, and some of the processes may be omitted or changed according to the configuration or the conditions of the information processing device 301. For example, in a case in which all the extension port types of the devices in the communication network are either the chassis type or the card type, it is possible to omit the process in step 801 in FIG. 8A. In a case in which all the extension port types of the devices in the communication network are the unit type, it is possible to omit the process in step 1202 in FIG. 12A.

In step 802 in FIG. 8A, in a case in which the instruction to select the icon indicates the port expansion instruction, it is possible to omit the processes in steps 803 and 804. In step 1201 in FIG. 12A, in a case in which the instruction to select the icon indicates the unit expansion instruction, it is possible to omit the processes in steps 1203 and 1204. In step 1301 in FIG. 13A, in a case in which the instruction to select the icon indicates the unit convergence instruction, it is possible to omit the processes in steps 1303 and 1304.

The port expanded display in FIGS. 10 and 11 and the unit expanded display in FIGS. 14 and 15 are examples only, and a portion of or the entire display may be changed according to the configuration or the conditions of the information processing device 301. For example, in lieu of the icon 1001 in FIGS. 10 and 11, an icon or a symbol of a different shape may be used. In lieu of the symbols 1002-1 to 1002-4, 1006-1 and 1006-2, symbols of a different shape may be used.

In lieu of the slot changeover button 1007 and the slot changeover button in FIG. 10, a button of a different shape or a different graphical user interface (GUI) component maybe used. In lieu of the button for port expansion 1101 in FIG. 11, a button of a different shape or a different GUI component may be used. In lieu of the marks 1004 and 1005 on the slot list 1003 in FIG. 10, a mark of a different shape may be used, or the marks 1004 and 1005 may be displayed in different places.

In the link display in FIG. 11, a common symbol may be displayed in addition to the icon 1001. In this case, with respect to the port groups of the slots other than SLOT1, a line segment that interconnects the common symbol and the symbol which represents the connection destination device or the connection destination port of each port is displayed.

In lieu of the icons 1401 to 1407 in FIGS. 14 and 15, icons or symbols of a different shape may be used. In lieu of the symbols 1501-1 to 1501-6, 1502-1, 1502-2, 1503-1, and 1503-2, symbols of a different shape may be used.

In lieu of the button for unit expansion 1412, the button for unit convergence 1413, and the button for port expansion 1414 in FIG. 14, buttons of different shapes or different GUI components may be used. In lieu of the mark 1411 in FIG. 14, a mark of a different shape may be used, or the mark 1411 may be displayed in a different position.

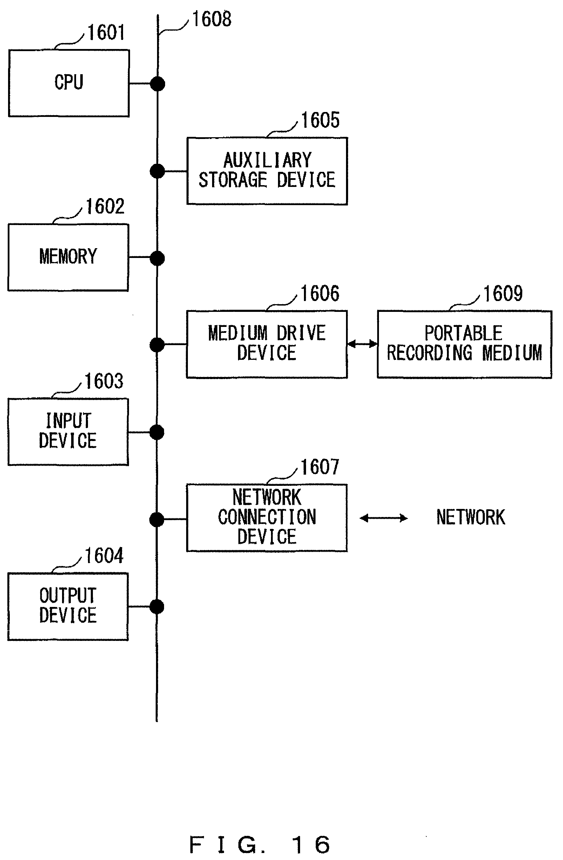

It is possible to realize the information processing device 301 illustrated in FIG. 3 by using, for example, the information processing device (computer) illustrated in FIG. 16.

The information processing device in FIG. 16 includes a central processing unit (CPU) 1601, a memory 1602, an input device 1603, an output device 1604, an auxiliary storage device 1605, a medium drive device 1608, and a network connection device 1607. These constituents are connected to one another via a bus 1608.

The memory 1602 is a semiconductor memory such as a read only memory (ROM), a random access memory (RAM), and a flash memory. The memory 1602 stores a program and data for the first display process or the second display process. It is possible to use the memory 1602 as the storage unit 311 in FIG. 3.

The CPU 1601 (processor) operates as the generation unit 312 in FIG. 3, for example, by executing the program using the memory 1602 and performs the first display process or the second display process.

The input device 1603 is, for example, a keyboard or a pointing device and is used for inputting instructions or information from a user or an operator. The output device 1604 is, for example, a display device, a printer, or a speaker, and is used for outputting an inquiry to the user or the operator and a processing result. The processing result may be an image of the display screen that includes a symbol which represents a device or a port, a line segment which interconnects two symbols, etc.

The auxiliary storage device 1605 is, for example, a magnetic disk device, an optical disk device, a magneto-optical disk device, a tape device, etc. The auxiliary storage device 1605 may be a hard disk drive or a flash memory. The information processing device can store a program and data in the auxiliary storage device 1605 and can use them by loading them into the memory 1602. It is possible to use the auxiliary storage device 1605 as the storage unit 311 in FIG. 3.

The medium drive device 1606 drives a portable recording medium 1609 and accesses the recorded content thereof. The portable recording medium 1609 is, for example, a memory device, a flexible disk, an optical disk, or a magneto-optical disk. The portable recording medium 1609 may be a compact read only memory (CD-ROM), a digital versatile disk (DVD), a universal serial bus (USB) memory, etc. A user or an operator can store a program and data in the portable recording medium 1609 and can use them by loading them into the memory 1602.

As described, the computer-readable recording medium that stores a program and data is a physical (non-transitory) recording medium such as the memory 1602, the auxiliary storage device 1605, and the portable recording medium 1609.

The network connection device 1607 is a communication interface that is connected to a communication network such as a local area network (LAN) and the Internet and performs data conversion accompanying communication. The information processing device can receive a program and data from an outside device via the network connection device 1607 and can use them by loading them into the memory 1602.

The information processing device can send display data for displaying an image of the display screen to a user terminal by receiving instructions or information from the user terminal via the network connection device 1607 and by performing the first display process or the second display process.

Note that the information processing device does not necessarily include all the constituents in FIG. 16, and it is possible to omit some of the constituents according to the intended use or conditions. For example, in a case in which the information processing device receives instructions or information from the user terminal via the communication network, the input device 1603 and the output device 1604 may be omitted. In a case in which the information processing device does not access the portable recording medium 1609 or the communication network, the medium drive device 1606 or the network connection device 1607 may be omitted.

In a case in which the information processing device is a mobile terminal that has a voice calling feature such as a smartphone, the information processing device may include devices for voice calling such as a microphone and a speaker, and may include an imaging device such as a camera.

## Claims

1. A display method comprising:
displaying a first symbol (1001) that represents a first device from among a plurality of devices in a communication network;
receiving (901) an instruction to display a specific port group from among a plurality of port groups that the first device includes; and
displaying (811, 904) a second symbol (1002) that represents a first port which is included in the specific port group in a position adjacent to the first symbol and displaying (813, 904) a line segment that indicates a connection relationship between the first port and a second device from among the plurality of devices.

2. The display method according to claim 1, wherein
the line segment interconnects the second symbol and a third symbol that represents a connection destination of the first port, the display method further comprising:
displaying (816, 904) as a line segment that indicates a connection relationship between a second port which is included in another port group from among the plurality of port groups that is other than the specific port group, and a connection destination of the second port, a line segment that interconnects a common symbol (1001) which is common to the plurality of port groups, and a fourth symbol which represents the connection destination of the second port.

3. The display method according to claim 2, the display method further comprising:
hiding (902) the second symbol and the line segment that interconnects the second symbol and the third symbol, displaying (811, 904) a fifth symbol that represents the second port, displaying (813, 904) a line segment that interconnects the fifth symbol and the fourth symbol, and displaying (816, 904) a line segment that interconnects the common symbol and the third symbol when an instruction to display the other port group has been received.

4. The display method according to claim 2 or 3, wherein
the displaying the line segment that interconnects the common symbol and the fourth symbol displays the line segment that interconnects the common symbol and the fourth symbol with an attribute different from an attribute of the line segment that interconnects the second symbol and the third symbol.

5. An information processing device comprising:
a storage unit (311) configured to store information of a plurality of port groups which a first device from among a plurality of devices in a communication network includes; and
a generation unit (312) configured to receive an instruction to display a specifc port group from among the plurality of port groups, and to generate display data for displaying a second symbol (1002) that represents a first port which is included in the specifc port group in a position adjacent to a first symbol (1001) that represents the first device and for displaying a line segment that indicates a connection relationship between the first port and a second device from among the plurality of devices.

6. A display program causing a computer to execute a process comprising:
displaying a first symbol (1001) that represents a first device from among a plurality of devices in a communication network;
receiving (901) an instruction to display a specific port group from among a plurality of port groups that the first device includes; and
displaying (811, 904) a second symbol (1002) that represents a first port which is included in the specific port group in a position adjacent to the first symbol, and displaying (813, 904) a line segment that indicates a connection relationship between the first port and a second device from among the plurality of devices.

7. A display method comprising:
displaying a first symbol (1402) that represents a first device from among a plurality of devices in a communication network and a second symbol (1404) that represents a second device from among the plurality of devices;
receiving (1201) an instruction to select the first symbol;
receiving (1204) an instruction to display a third device which is one of the plurality of devices and which is connected to the first device when a storage unit stores information which indicates that the third device is a device that extends the first device; and
displaying (1213) a third symbol (1406, 1407) that represents the third device and that has a mark (1411) which the first symbol has.

8. The display method according to claim 7, the display method further comprising:
displaying (1214) between the first symbol and the third symbol a line segment which indicates that the first device and the third device are interconnected, and displaying (1216) between the first symbol and the second symbol a line segment which indicates that the first device and the second device are interconnected when the storage unit stores information which indicates that the second device is connected to the first device.

9. The display method according to claim 7 or 8, wherein
the second symbol does not have the mark when the storage unit does not store information which indicates that the second device is a device which extends the first device.

10. The display method according to any of claims 7 to 9, wherein,
the receiving the instruction to select the first symbol receives an operation to move a cursor to a position of the first symbol as the instruction to select the first symbol, and the receiving the instruction to display the third device displays (1203) a button (1412) for displaying the third device and receives an operation to specify the button as the instruction to display the third device.

11. An information processing device comprising:
a storage unit (311) configured to store information of a plurality of devices in a communication network; and
a generation unit (312) configured to receive an instruction to select a first symbol (1402) which represents a first device from among the plurality of devices when the first symbol and a second symbol (1404) which represents a second device from among the plurality of devices are displayed, to receive an instruction to display a third device which is one of the plurality of devices and which is connected to the first device when the storage unit stores information which indicates that the third device which is a device that extends the first device, and to generate display data for displaying a third symbol (1406, 1407) that represents the third device and that has a mark (1411) which the first symbol has.

12. A display program causing a computer to execute a process comprising:
displaying a first symbol (1402) that represents a first device from among a plurality of devices in a communication network and a second symbol (1404) that represents a second device from among the plurality of devices;
receiving (1201) an instruction to select the first symbol;
receiving (1204) an instruction to display a third device which is one of the plurality of devices and which is connected to the first device when a storage unit stores information which indicates that the third device is a device which extends the first device; and
displaying (1213) a third symbol (1406, 1407) that represents the third device and that has a mark (1411) which the first symbol has.
